Europäisches Patentamt

European Patent Office

Office européen des brevets

(11) Publication number: **0 153 023**
**B1**

# EUROPEAN PATENT SPECIFICATION

(45) Date of publication of patent specification: **30.08.89**

(51) Int. Cl.⁴: **B 60 P 3/08,** B 60 P 3/07

(21) Application number: **85300429.9**

(22) Date of filing: **23.01.85**

(60) Divisional application **86108869 filed on 30.06.86.**

(54) Apparatus for supporting vehicles and the like.

(30) Priority: **03.02.84 US 576560**

(43) Date of publication of application:
**28.08.85 Bulletin 85/35**

(45) Publication of the grant of the patent:
**30.08.89 Bulletin 89/35**

(84) Designated Contracting States:
**DE FR GB SE**

(56) References cited:
**DE-B-1 555 717**
**US-A-2 524 260**
**US-A-3 043 454**
**US-A-4 066 289**

(73) Proprietor: **DALLAS SMITH ENGINEERING CORPORATION**
**4631 South 32nd Street**
**Phoenix Arizona 85040 (US)**

(72) Inventor: **Smith, Earl Dallas**
**2 Colonia Miramonte**
**Scottsdale Arizona 85253 (US)**

(74) Representative: **Massey, Alexander et al**
**MARKS & CLERK Suite 301 Sunlight House Quay Street**
**Manchester, M3 3JY (GB)**

Courier Press, Leamington Spa, England.

# Description

This invention relates to apparatus for supporting vehicles during transportation of the vehicles, and relates especially to such vehicle-supporting apparatus suitable for use in a trailer adapted for transporting vehicles and which is convertible for transporting other types of products or cargoes.

In US-A-4066289 there is disclosed apparatus for supporting a vehicle having a front wheel and a rear wheel on one side of the vehicle and a corresponding front wheel and rear wheel on the other side of the vehicle, the apparatus comprising a first pair of wheel supports positioned below the front wheels and adapted to support and engage the front wheels of the vehicle fore-and-aft thereof, and a second pair of wheel supports similarly supporting and engaging the rear wheels of the vehicle.

In US-A-4066289, the first and second pairs of wheel supports extend transversely to the chassis of a transporting vehicle and are releasably secured to a pair of longitudinal chassis members of the transporting vehicle.

A vehicle to be transported would be lifted onto the transporting vehicle and lowered onto same to engage its front wheels and its rear wheels respectively with the first and second pairs of wheel supports secured to the transporting vehicle chassis.

It is an object of the present invention to provide apparatus for supporting a vehicle for, for example, transportation purposes, which apparatus can be fitted to the vehicle to be supported while it is standing with its wheels on the ground, and which is adapted to be releasably connected with the vehicle while the latter is being transported for example.

According to the present invention there is provided apparatus for supporting a vehicle having a front wheel and a rear wheel on one side of the vehicle, and a front wheel and a rear wheel on the other side of the vehicle, which apparatus comprises a first pair of wheel supports for positioning below and fore-and-aft respectively of the front wheel of the vehicle, and a second pair of wheel supports for positioning below and fore-and-aft respectively of a rear wheel of the vehicle, the apparatus being characterised in that it comprises independent and separate first and second length-adjustable arm assemblies, each adapted to extend longitudinally adjacent both of the front and the rear wheels on a respective side of the vehicle, and each of said arm assemblies including a said first pair of wheel supports connected to and extending horizontally perpendicular to the arm assembly the wheel supports together with the respective arm assembly defining, in plan, a generally U-shaped opening for receiving the front wheel, and each of said first pair of wheel supports including a first end connected with the respective arm assembly and a second end spaced from the respective arm assembly, the second ends of said first pair of wheel supports being free from one another on the side of the front wheel opposite the respective arm assembly, and each arm assembly further including a said second pair of wheel supports connected to and extending horizontally perpendicular to the respective arm assembly, the wheel supports together with the respective arm assembly defining, in plan, a generally U-shaped opening for receiving the rear wheel, and each of said second pair of wheel supports including a first end connected with the respective arm assembly and a second end spaced from the respective arm assembly, the second ends of said second pair of wheel supports being free from one another on the side of the rear wheel opposite the respective arm assembly, whereby each of said first and second arm assemblies can be positioned to engage the front and rear wheels on the respective side of the vehicle by moving each arm assembly laterally toward the vehicle independently of the other arm assembly, and the length adjustment of the first and second arm assemblies permitting the first and second pairs of wheel supports to accommodate different distances between the front and rear wheels of the vehicle, attachment means on each of said first and second arm assemblies for attaching each arm assembly to the vehicle, and support receiving means associated with each of said first and second arm assemblies for receiving an external support member to permit support of the vehicle by support of each arm assembly and its pairs of wheel supports.

The above-defined vehicle-supporting apparatus facilitates the transporting of vehicles on a trailer, especially an enclosed trailer, provided with apparatus for receiving and supporting the vehicle-supporting apparatus and its associated vehicle, and facilitates generally the lifting, carrying, moving, storing and other handling of a vehicle.

An embodiment of the present invention will now be described, by way of example, with reference to the accompanying drawings, whereof Figs 1 to 14 illustrate an enclosed trailer vehicle suitable for transporting vehicles and an associated vehicle loading system, Figs 15 to 20 illustrate apparatus mounted in the trailer vehicle for supporting the vehicles to be transported with their associated, releasably-connected supporting apparatus, and Figs 21 to 23 illustrate the vehicle-supporting apparatus according to the present invention.

In the drawings:-

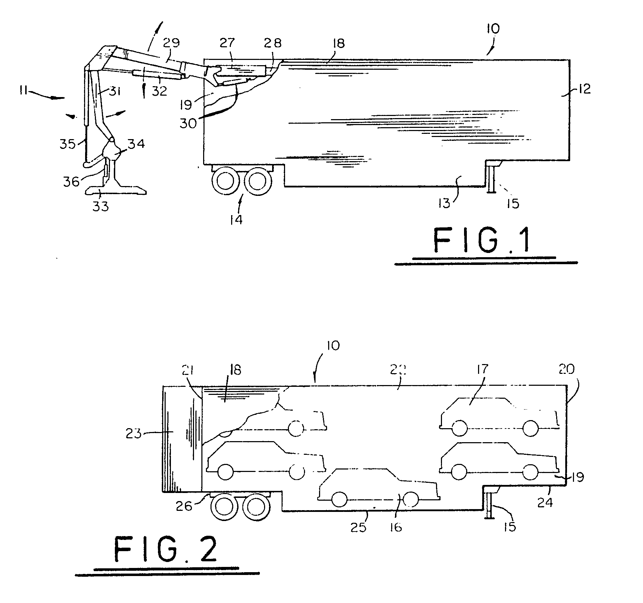

FIG. 1 is a side, elevational view of a trailer including a powered loading system.

FIG. 2 is a side, cross-sectional view of a trailer and particularly showing in schematic fashion the location of vehicles carried therein.

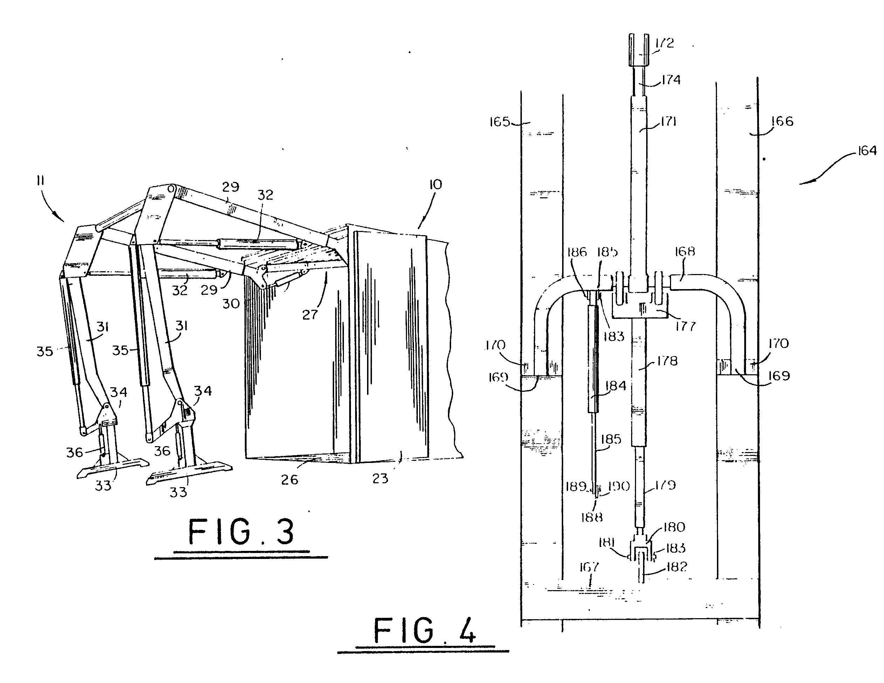

FIG. 3 is a perspective view of a loading system useful with the trailer of FIG. 1.

FIG. 4 is a front, elevational view of one embodiment of a vehicle support assembly mounted to the inside wall of the trailer.

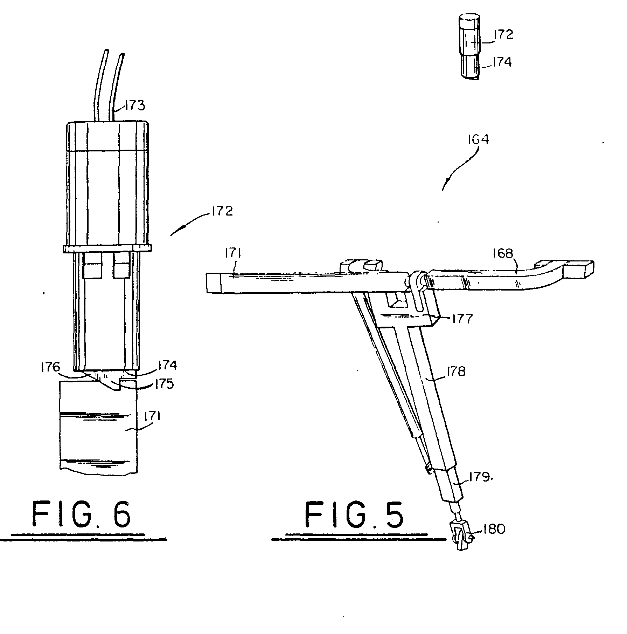

FIG. 5 is a perspective view of the support assembly of FIG. 4.

FIG. 6 is a side, elevational view of a solenoid valve useful with the support assembly of FIG. 4.

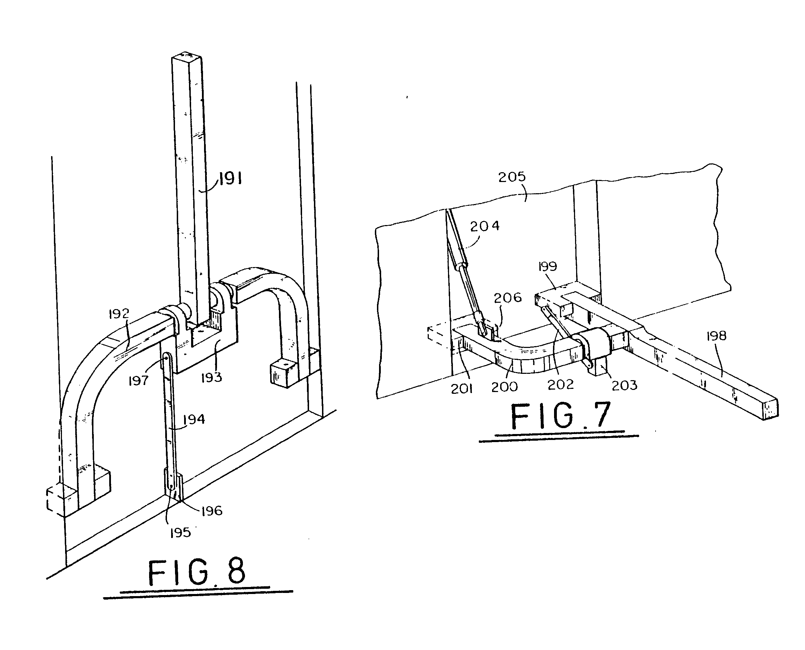

FIG. 7 is a perspective view of a second embodiment for a support assembly mounted within the trailer.

FIG. 8 is a perspective view of a third embodiment of a support assembly, shown mounted to the inside wall of a trailer in the down position.

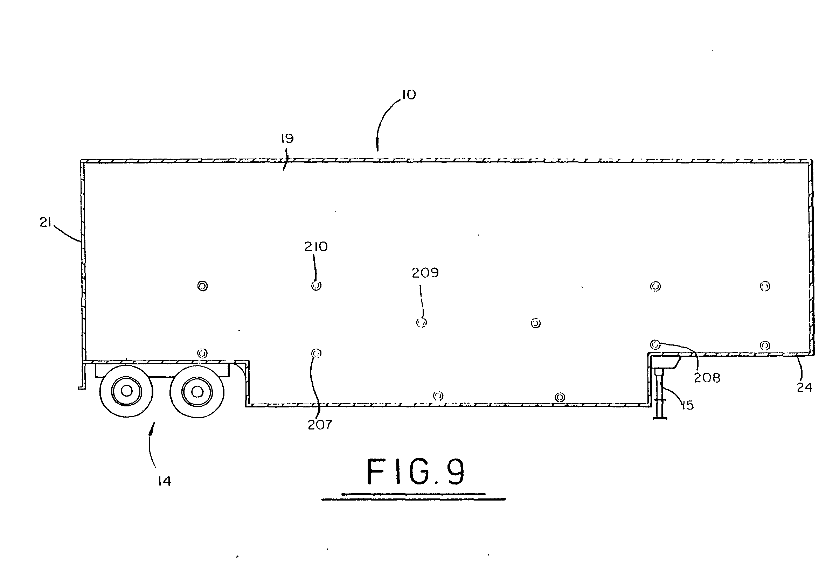

FIG. 9 is a cross-sectional view of a trailer and particularly showing exemplary locations for support rods useful in carrying vehicles within the trailer.

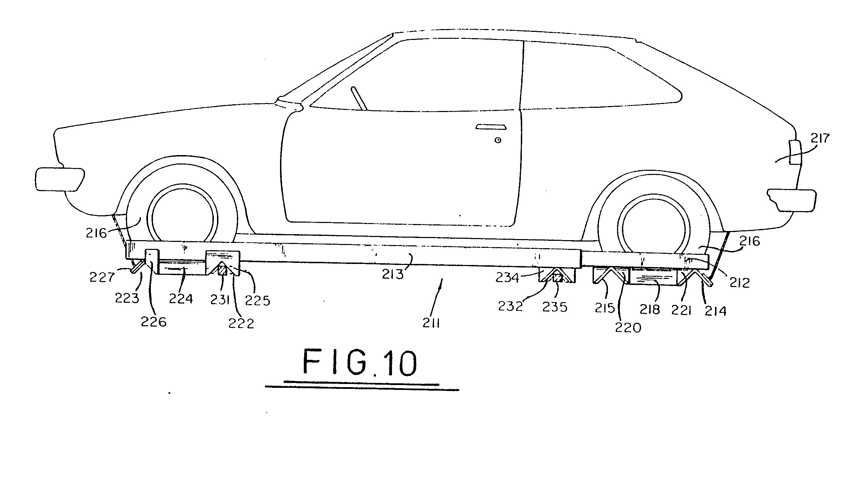

FIG. 10 is a side, elevational view of the outside of vehicle-supporting apparatus according to the invention shown secured to a vehicle to facilitate loading and carrying of the vehicle within the trailer.

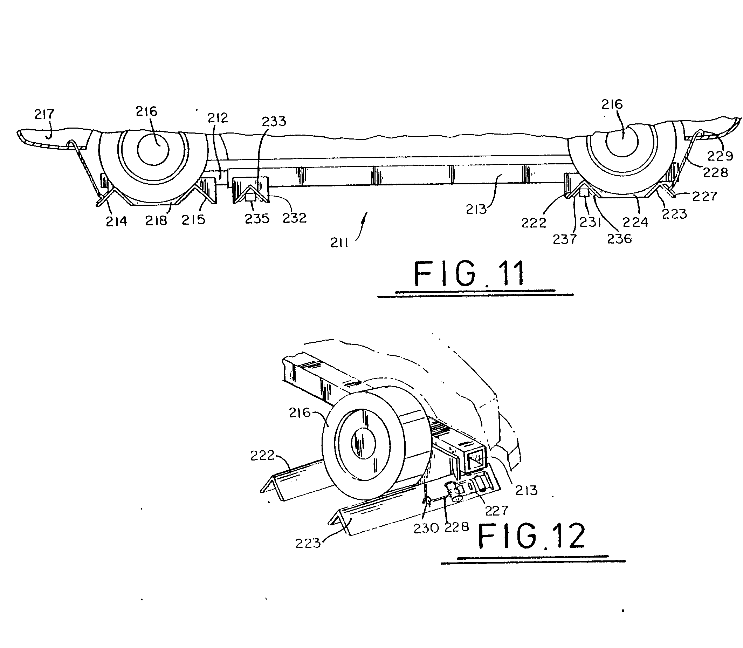

FIG. 11 is a side, elevational view of the inside of the vehicle-supporting apparatus of FIG. 10.

FIG. 12 is an inside, perspective view of the front portion of the vehicle-supporting apparatus of FIG. 10, and particularly showing its attachment to the vehicle.

The enclosed transporting trailer and its associated powered loading system will be described first.

Referring in particular to the drawings, there is shown a trailer 10 having a loading system 11. The trailer 10 may be generally of standard design and construction, with several important exceptions which will become apparent from the following description. These differences are particularly related to providing a suitable trailer configuration which is adapted for mounting and carrying automobiles, as well as other types of cargo.

As shown, the trailer 10 includes a body 12 mounted upon a supporting frame 13. In usual fashion, the frame 13 is mounted upon wheels 14 and includes typical front support legs 15 which may be lowered or raised depending on the use of the trailer.

The body 12 of the trailer defines a complete enclosure within which various types cargo may be received. The trailer will self-load and thereafter carry a number of automobiles, and at the same time may be quickly adapted for carrying other types of cargo. The full enclosure defined by the body 12 is therefore desirable both to provide a more advantageous transportation of vehicles, and at the same time to provide standard carrying of other types of cargo normally hauled by standard trailers.

In FIG. 2, for example, there is a somewhat schematic representation of the trailer of FIG. 1 with the near side removed to show the carrying of several vehicles, such as 16 and 17, within the trailer. The body 12 includes side walls 18 and 19, front wall 20, rear wall 21 and top wall 22. The rear wall 21 is preferably defined by a pair of hinged doors, such as 23, which are hingedly attached at the rear end of the side walls and pivot together to enclose the rear of the trailer.

As shown particularly in FIG. 2, the floor of the trailer is divided into three sections, namely the front floor 24, the recessed, center floor 25, and the rear floor 26. The inclusion of the recessed center floor permits the reception of a vehicle, such as 16, down upon that floor to permit the trailer to carry five vehicles. In an alternate embodiment, the trailer is extended lengthwise to receive a pair of vehicles on the recessed center floor 25. In that instance, the trailer is able to carry eight vehicles since the lengthened body of the trailer permits three pairs of vertically-stacked cars to be carried above the two vehicles received upon the center floor.

In FIG. 1 there is provided a schematic view of the major components for the loading system 11. The loading system 11 includes a carriage 27 which includes wheels that roll along a longitudinal track 28 that extends the length of the trailer. Pairs of primary arms. such as 29, are pivotally attached to the carriage 27 and are operable to be raised and lowered by means of primary hydraulic cylinders, such as 30. Pairs of secondary arms, such as 31, are pivotally attached to the primary arms and are operable to be pivoted relative the primary arms by means of the secondary hydraulic cylinders, such as 32.

The vehicles are lifted upon a pair of opposed clamp arms, such as 33. Clamp arm 33 is pivotally mounted to the secondary arm 31 by means of a mounting bracket 34. A levelling hydraulic cylinder 35 connects between the secondary arm 31 and the mounting bracket 34 and is operable to adjust the horizontal position of the clamp arm 33 in order to maintain a desired level orientation during loading of the vehicle. The clamp arm 33 is also pivotally mounted to the mounting bracket 34 about a second horizontal axis, and is operable by means of the clamping hydraulic cylinder 36 to be pivoted toward or away from the vehicle in order to clamp or release the vehicle.

Spaced and mounted along the interior walls of the trailer are support means incorporating support arms utilized for carrying the automobiles within the trailer. These trailer-mounted support means are the subject of our European Patent Application No. 86108869.8 filed 23rd January 1985 and divided out of the present Application. A first embodiment of the support arms is shown in Figs. 4 and 5 wherein a support arm 164 is shown in an upward or retracted position in FIG. 4, and in a downward or extended position in FIG. 5.

Support arm 164 is shown mounted within channels 165 and 166 in the trailer wall and also supported on a cross member 167 extending between the channels. The support arm includes a generally U-shaped member 168 having ends 169 pivotally mounted to U-shaped supports 170 secured to the side walls of the channels 165 and 166, respectively. The support arm 164 further includes the support member 171 which is secured to the U-shaped member 168.

As shown in the drawings, the support arm has a first, vertical position in which the support member 171 and U-shaped member 168 are received against the inside wall of the trailer. The support arm also includes a second position (FIG. 5) in which the U-shaped member and support member extend generally horizontally.

The support arm is maintained in the first, vertical position by a solenoid valve 172. Wires 173 extend from the solenoid into and through the wall of the trailer to the control unit for operation of the valve. The valve includes a lock pin 174 which has a projection 175 receivable within a notch in the end of the support member 171. The leading edge 176 is tapered so that the lock pin is forced upwardly when the support member is physically moved against the wall surface. The lock pin 174 is biased in the downward or extended position and therefore retains the support member 171 against the wall surface until the solenoid is activated. Upon activation of the solenoid, the support arm is released to the downward position and will fall to that position as a result of gravity.

The support arm is held in the downward, horizontal position by a telescoping support assembly. This assembly includes a yoke member 177 which includes arms which rotatably receive the U-shaped member 168 in aligned apertures. The yoke member 177 is attached to an outer, telescoping member 178 within which is received an inner telescoping member 179. The telescoping members are constructed such that the inward travel of the member 179 is limited to that shown in Fig. 5, therefore to a position at which the support arm 164 is held in the horizontal position. To accommodate the movement of the support arm to the downward position, the inner telescoping member 179 includes a clevis 180 secured by a pin 181 to an apertured boss 182 secured with the cross member 167. In conventional fashion, the pin 181 may be held in place by a cotter pin 183. Thus, when the solenoid 172 is activated, the lock pin 174 is raised and the support arm will rotate downwardly to the horizontal position, at which point it is stopped by the limited travel of the inner telescoping member 179 within the outer telescoping member 178.

An air cylinder 184 is provided as a shock-absorber for the downward movement of the support arm. Cylinder 184 is secured to a clevis 185 attached to the U-shaped member by a pin 186 and cotter pin 187. Similarly, the piston 185 is attached to a boss 188 attached to the trailer wall by a pin 189 that is received through aligned apertures in the piston and the boss and is held in place by a cotter pin 190.

At other locations within the trailer, modified forms of the support arm as shown in Figs. 4 and 5 are desirable. For example, adjacent the floors of the trailer there is not sufficient room and there is not need for the type of support assemblies as provided for the support arm 164. For these locations, the respective support member may be braced directly upon the floor, as shown, for example, in the embodiment of FIG. 7. As shown in this figure, there is provided a support member 191 attached to a U-shaped member 192 which in turn includes ends that are pivotally mounted to the inside wall of the trailer. A support yoke 193 is rotatably mounted to the U-shaped member. Arm 194 is mounted at one end by a pin 195 to a boss 196 secured with the trailer wall and at the other end by a pin 197 to the support yoke 193. When the support member 191 is rotated downwardly away from the side wall, the arm 194 causes the support yoke 193 to rotate relative the U-shaped member. As a result, the bottom of the yoke 193 as shown in FIG. 7 remains in that orientation and rests against the floor of the trailer with the U-shaped member 192 then being supported on the floor of the trailer by the yoke. The downward position for the alternate embodiment shown in FIG. 7 is similar to that for the third embodiment shown in FIG. 8.

The support arm as shown in FIG. 8 is a third embodiment and is useful in certain locations in the trailer for economics of space or for considerations of the desired location for the arm relative the normal vertical supports of the trailer. This embodiment is quite similar to that for FIG. 7, with the exception that the support member 198 extends inwardly and is directly mounted rotatably to the support block 199. In this embodiment, only half of a U-shaped support member 200 is employed, with it also terminating at an end which is rotatably mounted to a support block 201. Again, an arm 202 is pivotally mounted at its ends to the support block 199 and a collar member 203 to force the collar to rotate so that its base is received against the floor and supports the member 200 in the horizontal position.

For the embodiment of FIG. 5, it was indicated that a solenoid valve is used to release the support arm to the lowered, horizontal position. These arms are particularly useful for the upper level supports of the trailer, i.e. those arms that hold the vehicles which are suspended above other vehicles mounted on the floor. The advantage of the solenoid release for the arms is that these arms are need be lowered only after the floor-mounted vehicle is in place, and a manual release would require a person to climb over the loaded vehicle in order to have access for changing the positions of the upper support arms. In contrast, the arms located adjacent the trailer floor can be manually operated since all of them may be lowered while the trailer is initially empty. For this reason, the support arms as shown in FIGS. 7 and 8 are not provided with a solenoid release valve. However, air cylinders, such as 204, are provided to retain the support arms in the upper position when desired. These cylinders 204 are mounted at the upper end to the side wall of the channel, such as 205, in which the support block 201 is mounted, and at their lower end to a boss 206 on the upper side of the member 200. By this connection, the cylinders are moved to a position beyond center when the support arms are raised to the fully vertical position. Thus, the initial movement of the support arm from vertical to horizontal requires compression of the air within the cylinder 204 and the force required to so compress the air may be selected to prevent the support arm from moving out of the verticle position under ordinary conditions. When it is desired to lower the support arms, the manual force necessary to compress the air cylinders may be applied and the support arms will then rotate fully down to the horizontal position as shown for example in FIG. 8.

In FIG. 9, a preferred layout for the location of the support members of the various support arms is shown. It will be appreciated that various layouts would be appropriate, with this being a preferred distribution for the support members in a standard trailer intended for carrying six vehicles on top of the support arms. In this configuration, the spacing between the pairs of support arms is 85 inches.

More particularly, the trailer 10 includes wheels 14 and retractable support legs 15. The front floor 24 is approximately 10 feet in length, the recessed, center floor is approximately 24½ feet in length and the rear floor is approximately 10 feet in length. Measuring from the rear wall 21 of the trailer, the support members are in succession located at approximately 86 inches, 171 inches, 250 inches, 335 inches, 415 inches and 500 inches. In typical fashion, the rear floor is elevated somewhat less than the forward floor such that alignment of the support members means that the support member 207 is raised about 30 inches above the center floor, whereas the support member 208 is raised about 33 inches above the floor. The center support members, such as 209, are raised about 63 inches above the center floor and the front and rear pairs of upper support members, such as 210 are raised about 90 inches above the center floor. It has been found that by this layout, a trailer having a standard length of 45 feet can accommodate the carrying of six vehicles on support arms in the manner of the present invention. At the same time, the trailer is provided with standard length, height, and width to be suitable both for transport use and also to accommodate other types of cargo in standard fashion, with minimal interference from the support arms and loading system.

In FIGS. 10 to 12 there is shown the vehicle-supporting apparatus according to the present invention. The supporting apparatus comprises wheel bars 211 designed to be mounted on opposite sides of the vehicle to provide a firm support of the vehicles onto the support arms. A pair of mirror image wheel bars are used for each vehicle and are individually mounted to the vehicle in the manner to be described.

Wheel bar 211 comprises a pair of rectangular, telescoping arms 212 and 213. A first pair of inverted, V-shaped wheel supports 214 and 215 is mounted to the telescoping member 212 for reception of the rear wheel 216 of the vehicle 217. The wheel supports 214 and 215 are mounted to a plate 218 welded on the inside of the wheel bar and further are secured to the inner telescoping arm 212 by a pair of brace members 220 and 221 secured adjacent the outer side of the arm.

The wheel bar 211 further includes a pair of front wheel supports 222 and 223. These wheel supports are secured to the outer telescoping arm 213 and are braced therewith by means of an interior plate 224, and exterior brace members 225 and 226.

The wheel bars are secured onto the vehicle by means of the wheel supports and hand ratchets, such as 227, located on the front and rear wheel supports. The wheel bars are positioned by adjusting the telescoped relationship of the arms 212 and 213 so that the vehicle wheels are received between the front and rear pairs of wheel supports. The wheel bars are then slid into position beneath the wheels, for example as shown in FIG. 12. The hand ratchets 227 include a cable 228 terminating in a hook 229 which is then secured at a suitable location of the vehicle, such as the tie down holes at the underside of the vehicle. The ratchets 227 are preferably hand operable and are positioned with the cable 228 extending about a pulley 230 also mounted on the wheel support and useful for directing the cable to the underside of the vehicle. Once the hook has been positioned, the ratchet is tightened until the wheel bar is pulled securely against the wheels of the vehicle. By the positioning of the pulley 230 as shown in FIG. 12, the tightening of the wheel bar will actually cause the wheel supports to reach a final position in which they are turned upwardly toward the underside of the vehicle.

The wheel bars include positions for placement upon the support arms previously described. As shown in the drawings, one of the trailer support arms 231 is received by one of the forward wheel supports 222. It has been determined that the typical weight distribution for a vehicle permits this wheel support to operate as the front placement position for one of the support arms of the trailer wall. Since the space between the support arms for the trailer is fixed, the two support positions for the wheel arms must also be fixed relative one another. Therefore, a second support member 232 is secured to the outer telescoping arm 213 by means of inner plate 233 and outer plate 234. In this fashion, the position between the support members 222 and 232 remains fixed since they are both attached to the same, outer telescoping arm 213, but at the same time the inner arm 212 is free to telescope with respect to the other arm in order to accommodate vehicles having different wheel bases. As shown, a second support arm 235 of the trailer is received by the inverted V-shaped support member 232. Also as shown, shims such as 236 and 237 are included on the undersurface of the V-shaped members receiving the support arms to provide a more firm engagement of the support arms by the members and also to eliminate the possibility that the vehicle would move off of the support arms upon sudden stopping or starting of the trailer.

## Claims

1. Apparatus for supporting a vehicle (217) having a front wheel (216) and a rear wheel (216) on one side of the vehicle (217), and a front wheel (216) and a rear wheel (216) on the other side of the vehicle (217), which apparatus comprises a first pair of wheel supports (222, 223) for positioning below and fore-and-aft respectively of a front wheel (216) of the vehicle (217), and a second pair of wheel supports (214, 215) for positioning below and fore-and-aft respectively of a rear wheel (216) of the vehicle, the apparatus being characterised in that it comprises independent and separate first and second length-adjustable arm assemblies (212, 213), each adapted to extend longitudinally adjacent both of the front and the rear wheels (216) on a respective side of the vehicle (217), and each of said arm assemblies (212, 213) including a said first pair of wheel supports (222, 223) connected to and extending horizontally perpendicular to the arm assembly (212, 213), the wheel supports (222, 223) together with the respective arm assembly (212, 213) defining, in plan, a generally U-shaped opening for receiving the front wheel (216), and each of said first pair of wheel supports (222, 223) including a first end connected with the respective arm assembly (212, 213) and a second end spaced from the respective arm assembly (212, 213), the second ends of said first pair of wheel supports (222, 223) being free from one another on the side of the front wheel (216) opposite the respective arm assembly (212, 213), and each arm assembly (212, 213) further including a said second pair of wheel supports (214, 215) connected to and extending horizontally perpendicular to the respective arm assembly (212, 213), the wheel supports (214, 215) together with the respective arm assembly (212, 213) defining, in plan, a generally U-shaped opening for receiving the rear wheel (216), and each of said second pair of wheel supports (214, 215) including a first end connected with the respective arm assembly (212, 213) and a second end spaced from the respective arm assembly (212, 213), the second ends of said second pair of wheel supports (214, 215) being free from one another on the side of the rear wheel (216) opposite the respective arm assembly (212, 213), whereby each of said first and second arm assemblies (212, 213) can be positioned to engage the front and rear wheels (216) on the respective side of the vehicle (217) by moving each arm assembly (212, 213) laterally toward the vehicle (217) independently of the other arm assembly (212, 213), and the length adjustment of the first and second arm assemblies (212, 213) permitting the first and second pairs of wheel supports (222, 223 and 214, 215) to accommodate different distances between the front and rear wheels (216) of the vehicle (217), attachment means (227) on each of said first and second arm assemblies (212, 213) for attaching each arm assembly (212, 213) to the vehicle (217), and support receiving means (222, 232) associated with each of said first and second arm assemblies (212, 213) for receiving an external support member (231, 235) to permit support of the vehicle (217) by support of each arm assembly (212, 213) and its pairs of wheel supports (222, 223 and 214, 215).

2. Apparatus as claimed in claim 1, in which each arm assembly (212, 213) includes a first arm (212) and a second arm (213), the first arm (212) being telescopically received within the second arm (213), said first pair of wheel supports (222, 223), being attached to the first arm (212) and said second pair of wheel supports (214, 215) being attached to the second arm (213).

3. Apparatus as claimed in claim 1 or 2 in which each of the pairs of wheel supports (222, 223 or 214, 215) include wheel supports which are convergent downwardly to provide a wedge configuration within which the wheel (216) is received.

4. Apparatus as claimed in claim 3 in which each of the wheel supports (222, 223 and 214, 215) has an inverted-V cross-sectional shape.

5. Apparatus as claimed in any one of claims 1 to 4 in which the attachment means (227) is for attaching the respective arm assembly 212, 213 to the underside of the vehicle (217).

6. Apparatus as claimed in claim 5, in which the attachment means (227) is adapted to attach at least one wheel support (222, 223; 214, 215) to the vehicle (217) at a point on the wheel support displaced from said arm assembly (212, 213).

7. Apparatus as claimed in claim 5 or 6 in which the attachment means (227) includes a ratchet (227) attached to either the arm assembly (212, 213) or a wheel support (222, 223; 214, 215).

8. Apparatus as claimed in claim 7 in which the ratchet (227) includes a hook means (229) for hooking onto a portion of the vehicle (217).

9. Apparatus as claimed in any one of claims 1 to 8 in which the receiving means (222, 232) includes at least one of said wheel supports (222).

**Patentansprüche**

1. Vorrichtung zum Stützen eines Fahrzeugs (217) mit einem Vorderrad (216) und einem Hinterrad (216) auf einer Seite des Fahrzeugs (217), und einem Vorderrad (216) und einem Hinterrad (216) auf der anderen Seite des Fahrzeugs (217), welche ein erstes Radstützenpaar (222, 223) zur Positionierung unter und jeweils vor und hinter einem Vorderrad (216) des Fahrzeugs (217), und ein zweites Radstützenpaar (214, 215) zur Positionierung unter und jeweils vor und hinter einem Hinterrad (216) des Fahrzeugs aufweist, wobei die Vorrichtung dadurch gekennzeichnet ist, daß sie unabhängige und separate erste und zweite längenverstellbare Armaufbauten (212, 213) umfaßt, von denen jeder sich in Längsrichtung sowohl neben den Vorderals auch neben den Hinterrädern (216) auf jeweils einer Seite des Fahrzeugs (217) erstrecken kann, wobei jeder der Armaufbauten (212, 213) ein mit dem Armaufbau (212, 213) verbundenes und in Horizontalrichtung senkrecht dazu verlaufendes erstes Radstützenpaar (222, 223) umfaßt, wobei die Radstützen (222, 223) zusammen mit dem jeweiligen Armaufbau (212, 213) in Draufsicht eine im allgemeinen U-förmige Öffnung zur Aufnahme des Vorderrades (216) beschreiben, und jede der Radstützen (222, 223) des ersten Paares ein mit dem jeweiligen Armaufbau (212, 213) verbundenes erstes Ende und ein vom jeweiligen Armaufbau (212, 213) beabstandetes zweites Ende umfaßt, wobei die zweiten Enden des ersten Radstützenpaares (222, 223) auf der dem jeweiligen Armaufbau (212, 213) gegenüberliegenden Seite des Vorderrades (216) frei voneinander angeordnet sind, und jeder Armaufbau (212, 213) ferner ein mit dem jeweiligen Armaufbau (212, 213) verbundenes und in Horizontalrichtung senkrecht dazu verlaufendes zweites Radstützenpaar (214, 215) umfaßt, wobei die Radstützen (214, 215) zusammen mit dem jeweiligen Armaufbau (212, 213) in Draufsicht eine im allgemeinen U-förmige Öffnung zur Aufnahme des Hinterrads (216) beschreiben, und jede der Radstützen (214, 215) des zweiten Paares ein mit dem jeweiligen Armaufbau (212, 213) verbundenes erstes Ende und ein vom jeweiligen Armaufbau (212, 213) beabstandetes zweites Ende umfaßt, wobei die zweiten Enden des zweiten Radstützenpaares (214, 215) auf der dem jeweiligen Armaufbau (212, 213) gegenüberliegenden Seite des Hinterrades (216) frei voneinander angeordnet sind, wobei jeder der ersten und zweiten Armaufbauten (212, 213) so positioniert sein kann, daß er die Vorder- und Hinterräder (216) auf der jeweiligen Seite des Fahrzeugs (217) durch seitliches Bewegen eines jeden Armaufbaus (212, 213) zum Fahrzeug (217) hin, unabhängig vom anderen Armaufbau (212, 213), in Eingriff nimmt, wobei die Längeneinstellung der ersten und zweiten Armaufbauten (212, 213) es den ersten und zweiten Radstützenpaaren (222, 223 und 214, 215) erlaubt, sich unterschiedlichen Abständen zwischen den Vorder- und Hinterrädern (216) des Fahrzeugs (217) anzupassen, mit Befestigungsmitteln (227) an jedem der ersten und zweiten Armaufbauten (212, 213) zum Befestigen jedes Armaufbaus (212, 213) am Fahrzeug (217), und jedem ersten und zweiten Armaufbau (212, 213) zugeordnete Stützaufnahmemitteln (222, 232) zur Aufnahme eines äußeren Stützelements (231, 235) um, durch Stützen jedes Armaufbaus (212, 213) und seiner Radstützenpaare (222, 223, und 214, 215), ein Stützen des Fahrzeugs (217) zu ermöglichen.

2. Vorrichtung nach Anspruch 1, in welcher jeder Armaufbau (212, 213) einen ersten Arm (212) und einen zweiten Arm (213) umfaßt, wobei der erste Arm (212) teleskopartig vom zweiten Arm (213) aufgenommen wird, und das erste Radstützenpaar (222, 223) am ersten Arm (212) und das zweite Radstützenpaar (214, 215) am zweiten Arm (213) befestigt ist.

3. Vorrichtung nach Anspruch 1 oder 2, in welcher jedes der Radstützenpaare (222, 223 oder 214, 215) Radstützen umfaßt, welche nach unten hin unter Bildung einer Keilform, in welche das Rad (216) aufgenommen wird, konvergieren.

4. Vorrichtung nach Anspruch 3, in welcher jede der Radstützen (222, 223 und 214, 215) im Querschnitt die Form eines umgekehrten V hat.

5. Vorrichtung nach irgendeinem der Ansprüche 1 bis 4, in welcher die Befestigungsmittel (227) zur Befestigung des jeweiligen Armaufbaus (212, 213) an der Unterseite des Fahrzeugs (217) bestimmt sind.

6. Vorrichtung nach Anspruch 5, in welcher die Befestigungsmittel (227) zur Befestigung von mindestens einer Radstütze (222, 223; 214, 215) an einer von dem Armaufbau (212, 213) entfernten Stelle an der Radstütze am Fahrzeug (217) ausgebildet sind.

7. Vorrichtung nach Anspruch 5 oder 6, in welcher die Befestigungsmittel (227) eine entweder am Armaufbau (212, 213) oder einer Radstütze (222, 223; 214, 215) befestigte Sperrklinke (227) umfassen.

8. Vorrichtung nach Anspruch 7, in welcher die Sperrklinke (227) Hakenmittel (229) zum Festhaken an einem Teil des Fahrzeugs (217) umfaßt.

9. Vorrichtung nach irgendeinem der Ansprüche 1 bis 8, in welcher die Aufnahmemittel (222, 232) mindestens eine der Radstützen (222) umfassen.

**Revendications**

1. Appareil pour supporter un véhicule (217) possédant une roue avant (216) et une roue arrière (216) sur un côté du véhicule (217), et une roue avant (216) et une roue arrière (216) sur l'autre côté du véhicule (217), lequel appareil comprend une première paire de supports de roue (222, 223) conçus pour se positionner en-dessous et respectivement devant et derrière une roue avant (216) du véhicule (217), et une seconde paire de supports de roue (214, 215) conçus pour se positionner en-dessous et respectivement devant et derrière une roue arrière (216) du véhicule, l'appareil étant caractérisé en ce qu'il comprend des premiers et seconds assemblages de bras indépendants et séparés de longueur ajustable (212, 213), chacun étant adapté pour s'étendre longitudinalement adjacent à la fois aux roues avant et arrière (216) sur un côté respectif du véhicule (217), et chacun desdits assemblages de bras (212, 213) comprenant une dite première paire de supports de roue (222, 223) reliée à et s'étendant horizontalement perpendiculaire à l'assemblage de bras (212, 213), les supports de roue (222, 223) conjointement avec l'assemblage de bras respectif (212, 213) définissant, en plan, une ouverture généralement en forme de U conçue pour recevoir la roue avant (216), et chacun de ladite première paire de supports de roue (222, 223) comprenant une première extrémité reliée à l'assemblage de bras respectif (212, 213) et une seconde extrémité espacée de l'assemblage de bras respectif (212, 213), les secondes extrémités de ladite première paire de supports de roue (222, 223) étant indépendantes les unes par rapport aux autres sur le côté de la roue avant (216) en regard de l'assemblage de bras respectif (212, 213), et chaque assemblage de bras (212, 213) comprenant en outre une dite seconde paire de supports de roue (214, 215) reliée à et s'étendant horizontalement perpendiculaire à l'assemblage de bras respectif (212, 213), les supports de roue (214, 215) conjointement avec l'assemblage de bras respectif (212, 213), définissant, en plan, une ouverture généralement en forme de U conçue pour recevoir la roue arrière (216), et chacun de ladite seconde paire de supports de roue (214, 215) comprenant une première extrémité reliée à l'assemblage de bras respectif (212, 213) et une seconde extrémité espacée de l'assemblage de bras respectif (212, 213), les secondes extrémités de ladite seconde paire de supports de roue (214, 215) étant indépendentes les une par rapport aux autres sur le côté de la roue arrière (216) en regard de l'assemblage de bras respectif (212, 213), où chacun des premier et second assemblages de bras (212, 213) peut être positionné pour engager les roues avant et arrière (216) sur le côté respectif du véhicule (217) en déplaçant chacun des assemblages de bras (212, 213) latéralement en direction du véhicule (217) indépendamment de l'autre assemblage de bras (212, 213), et l'ajustement de la longueur des premier et du second assemblages de bras (212, 213) permettant aux première et seconde paires de supports de roue (222, 223 et 214, 215) d'adopter différentes distances entre les roues avant et arrière (216) du véhicule (217), un moyen d'attachement (227) sur chacun desdits premier et second assemblages de bras (212, 213) conçu pour attacher chaque assemblage de bras (212, 213) au véhicule (217), et un moyen de réception du support (222, 232) associé à chacun des premier et second assemblages de bras (212, 213) conçu pour recevoir un membre extérieur de support (231, 235) pour permettre le support du véhicule (217) grâce au support de chaque assemblage de bras (212, 213) et ses paires de supports de roue (222, 223 et 214, 215).

2. Appareil selon la revendication 1, dans lequel chaque assemblage de bras (212, 213) comprend un premier bras (212) et un second bras (213), le premier bras (212) étant reçu de manière télescopique au sein du second bras (213), ladite première paire de supports de roue (222, 223) étant attachée au premier bras (212) et ladite seconde paire de supports de roue (214, 215) étant attachée au second bras (213).

3. Appareil selon la revendication 1 ou 2, dans lequel chacune des paires de supports de roue (222, 223 ou 214, 215) comprend des supports de roue qui sont convergents vers le bas pour fournir une configuration en coin au sein de laquelle la roue (216) est reçue.

4. Appareil selon la revendication 3, dans lequel chacun des supports de roue (222, 223 et 214, 215) a une forme de V renversé en coupe transversale.

5. Appareil selon l'une quelconque des revendications 1 à 4, dans lequel le moyen d'attachement (227) est conçu pour attacher l'assemblage de bras respectif 212, 213 au dessous du véhicule (217).

6. Appareil selon la revendication 5, dans lequel le moyen d'attachement (227) est adapté pour attacher au moins un support de roue (222, 223; 214, 215) au véhicule (217) en un point sur le support de roue déplacé dudit assemblage de bras (212, 213).

7. Appareil selon la revendication 5 ou 6, dans lequel le moyen d'attachement (227) comprend un cliquet (227) attaché soit à l'assemblage de bras (212, 213) soit a un support de roue (222, 223; 214, 215).

8. Appareil selon la revendication 7, dans lequel le cliquet (227) comprend un moyen de crochet (229) conçu pour s'accrocher sur une partie du véhicule (217).

9. Appareil selon l'une quelconque des revendications 1 à 8, dans lequel le moyen de reception (222, 232) comprend au moins un desdits supports de roue (222).

FIG.1

FIG.2

FIG. 3

FIG. 4

EP 0 153 023 B1

FIG. 6

FIG. 5

EP 0 153 023 B1

FIG. 7

FIG. 8

4

FIG.9

FIG.10

FIG.11

FIG.12

EP 0 153 023 B1